# EUROPEAN PATENT APPLICATION

(11) **EP 1 985 902 A1**
(43) Date of publication of application: **29.10.2008**
(21) Application number: 08251332.6
(22) Date of filing: 04.04.2008
(51) Int. Cl.: F16K 37/00

(54) **Valve position indicator**

(30) Priority: 26.04.2007 US 926339 P; 05.11.2007 US 982771
(71) Applicant: Barksdale, Inc., Los Angeles, California 90058 (US)
(72) Inventor: Rodriguez, James E., California 92656 (US); Ching, Angel, California 90640 (US)
(74) Representative: Hedley, Nicholas James Matthew

(57) **Abstract**

A position indicator (20) mountable on a valve housing (12) that forms a chamber that holds a piston assembly (24) that can slide to different positions spaced along an axis (32) that extends in front and rear directions (F, R), to indicate the position of the piston assembly along the axis. The position indicator includes a frame (60) that forms a cavity (62), a plunger (50) that is slidably mounted on the frame, and a spring (70) that urges the plunger forward along the axis. A plurality of switches (81-83) are mounted in the cavity, and a switch operator in the form of a slider (72) coupled to the plunger rear end to move with it, operates different switches as the plunger moves forward and rearward along the axis. The valve housing has a rear end (22) that can be opened and the indicator frame is mounted on the housing rear end, with a plunger front end (56) projecting forward of the frame and into the housing chamber (34) and abutting a rear end of the piston assembly in the housing.

## Description

### BACKGROUND OF THE INVENTION

One type of valve includes a housing that forms a chamber, and a piston assembly slidable in forward and rearward directions along an axis in the chamber, with front and rear stops that limit movement of the piston assembly. The piston assembly includes a rack that engages a pinion gear that is connected to a valve rotor. Passages in the rotor control the flow of fluid between selected ports. There is a need for a position sensor that indicates the position of the valve. One prior art approach is to position miniature position sensors in the limited space available in the housing around the rack, but this resulted in a high cost. Another approach is to observe the position of a handle attached to the pinion gear, but remote sensing requires a handle position sensor which is of high cost. A lower cost, reliable **position indicator with electrical output would be of value.**

### SUMMARY OF THE INVENTION

In accordance with one embodiment of the invention, a valve position indicator and a valve with such indicator are provided, that enables a determination of the position of a piston assembly within the valve housing along a front-to-rear axis, in a low cost and reliable assembly. The valve can be a prior art valve that includes a removable stop at the rear of the valve housing. The position indicator includes a frame that mounts at the location where the rear stop previously lay, and a plunger that is slidable in the frame along the axis and that is spring biased forwardly. The plunger front end projects forward of the frame into the valve housing and contacts the rear end of the piston assembly that lies in the housing.

In one embodiment, the plunger has an elongated passage that extends along the axis from a rear end of the plunger. A stationary rod mounted in the frame, extends forward into the passage. A coil spring extends around the rod and abuts the plunger rear end or a part that moves with the plunger rear end. A plurality of electrical switches lie in a frame cavity and are spaced along the axis. A slider that moves with the plunger rear end carries an operator that operates the switches as the plunger and slider move along the axis to different positions.

The novel features of the invention are set forth with particularity in the appended claims. The invention will be best understood from the following description when read in conjunction with the accompanying drawings.

### BRIEF DESCRIPTION OF THE DRAWINGS

Fig. 1 is a rear isometric view of a prior art valve.
Fig. 1A is a side elevation view of the valve of Fig. 1
Fig. 2 is a sectional view of the valve of Fig.1, with a position indicator of the present invention installed thereon.
Fig. 3 is an isometric and sectional view of the position indicator of Fig. 2.
Fig. 4 is a bottom view of only the circuit board of the position indicator of Fig. 3.
Fig. 5 is a sectional view of a position indicator of another embodiment of the invention.
Fig. 6 is a sectional view taken on line 6-6 of Fig. 5.

### DESCRIPTION OF THE PREFERRED EMBODIMENTS

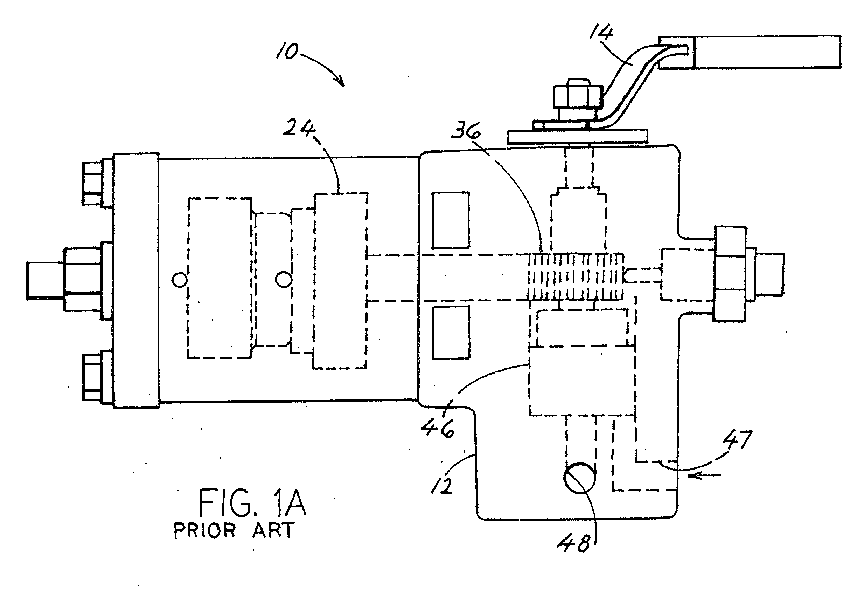

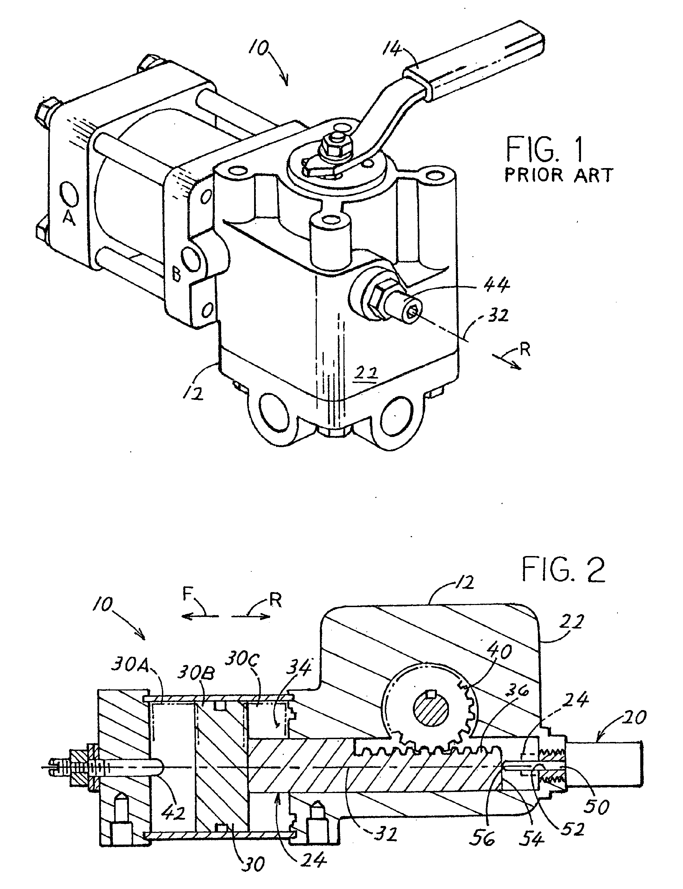

Fig. 1 shows a prior art valve 10 of a type that has a housing 12 and a handle 14 that was used as a manual override and sometimes as an indicator of valve position. The valve is used to control the flow of a pressured fluid such as hydraulic fluid, along a selected one of a plurality of paths between a plurality of ports in the housing. The valve and handle are moveable between two (or three) positions to control fluid flow along two (or three) paths.

Fig. 2 shows the valve 10 of Fig. 1 with a position indicator 20 attached to a rear end 22 of the valve housing. The valve includes a piston assembly 24 with a piston part 30 that is movable between three distinct positions 30A, 30B and 30C along an axis 32 that extends in front F and rear R directions along the valve housing chamber 34. The piston is moved by air or hydraulic pressure applied to it. The piston assembly also includes a gear rack part 36 that extends rearward from the piston part. A gear 40 fixed to the handle control 14 is actuated by the rack. The gear turns a hydraulic rotor 46 (Fig. 1A) that controls the flow of pressured fluid between an inlet 47 and outlet 48 (and possibly additional outlets). The control handle 14 can be used to control the hydraulic valve when there is no air or hydraulic pressure in the housing chamber. The handle can indicate the valve position but the handle usually is hidden from direct observation. A front stop limits rack movement in the forward direction F past an extreme position. A rear stop 44 (Fig. 1) limits rearward rack movement in the rear direction R.

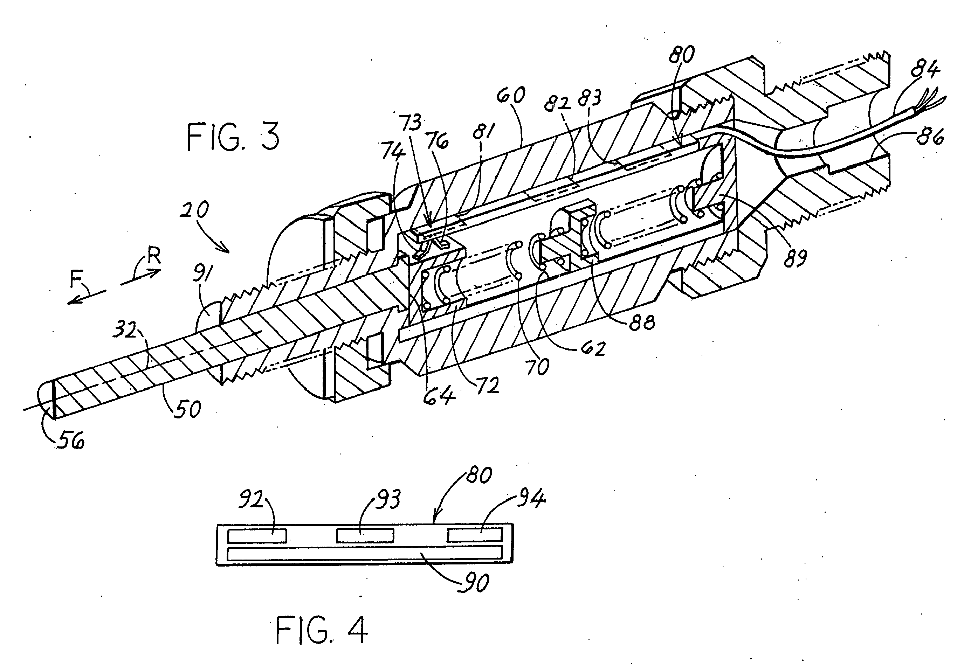

In the present invention, the rear stop 44 is removed and the position indicator 20 (Fig. 2) of the present invention is installed in its place. The position indicator includes a plunger 50 that is spring biased forwardly and that projects forward F though a threaded hole 52 in the rear of the housing. The plunger 50 extends along the axis 32 into the chamber 34, and has a front end 56 that contacts the rear end 54 of the piston assembly 24, and in this way the plunger is coupled to the piston assembly to be moved by it. A frame front 91 (Fig. 3) serves as a rear stop. The plunger is part of the position indicator that indicates the position of the valve 46.

Fig. 3 shows that the position indicator 20 includes an indicator frame 60 with a cavity 62. The plunger has a rear end 64 that lies in the cavity and that is biased forwardly F by a long coil spring 70 that lies in the cavity. The coil spring, which can be in two parts, assures that the front end of the plunger is in constant contact with the piston assembly in the housing.

A slider 72 lies between the front end of the spring and the rear end of the plunger. The slider 72 carries a switch operator 73 in the form of electrical contacts 74, 76. A circuit board 80 lies in the frame cavity and carries three electrical switch parts, or switches 81-83. When the slider moves adjacent to one of the switch parts, the contacts 74, 76 operate the switch as by closing (or possibly opening) the switch. A cable 84 extends from the circuit board and out of the frame though a frame port 86.

The spring also carries a middle guide 88 that supports the middle of the long spring close to the axis 32. If the piston assembly (24, Fig. 2) should move too far rearward, the front 91 of the frame will stop it.

Fig. 4 is a bottom view of the circuit board of Fig. 3, showing that the board has a long common conductive trace 90 and three shorter position-indicating conductive traces 92-94 that form switch parts, or switches. Routing traces (not shown) on the circuit board connect to the cable 84. A display (not shown) controlled by electrical signals passing though the cable, indicates which of the positions that the piston assembly is in, and therefore which flow path the pressured fluid takes.

The position indicator 20 is designed to be retrofitted to an existing valve by unscrewing the prior art second stop 44 (Fig. 1) and replacing it with the position indicator 20. As mentioned above, the position indicator acts as a stop that limits rearward movement of the piston assembly. The position indicator is moderately reliable because the contacts 74, 76 on the slider repeatedly wipe across the contact traces on the circuit board, which removes oxides.

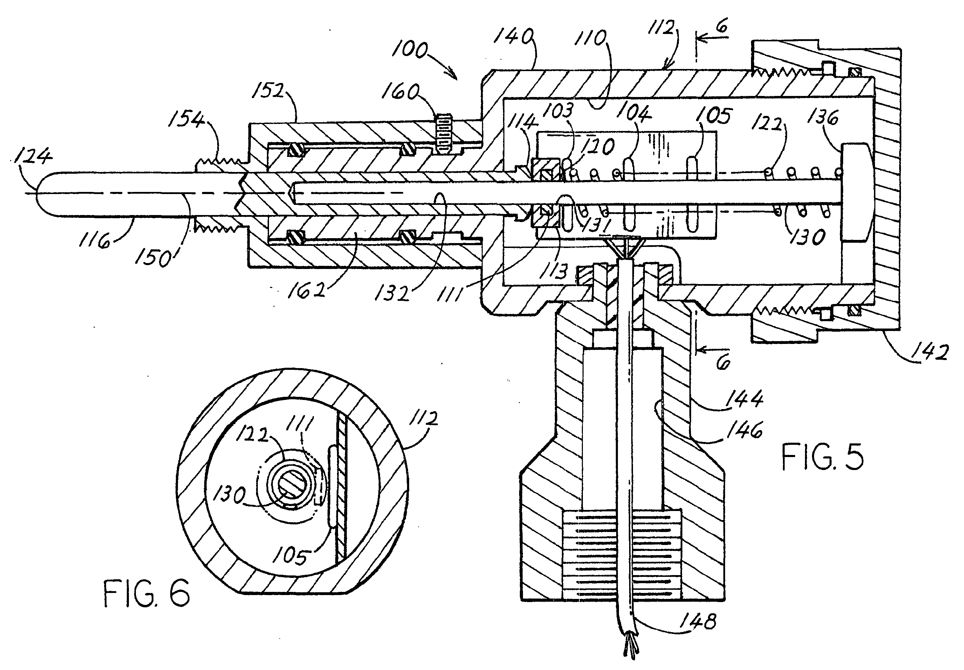

Fig. 5 shows a position indicator 100 of another embodiment of the invention, which includes a plurality of reed switches 103-105 that lie in a cavity 110 of an indicator frame 112 and that are operated by an operator in the form of a magnet 111 on a slider 113. The slider lies between the rear end 114 of a plunger 116 and a front end 120 of a compression coil spring 122. Since the slider moves forward and rearward with the plunger, the slider can be considered to be part of the plunger. As in the earlier embodiment of the invention, the plunger has a front end 124 that, at least on average (halfway between its frontmost and rearmost positions in use), extends forward of the frame 112 and projects into a valve chamber that holds a piston assembly.

The position indicator includes a rod 130 that extends through a hole 131 in the slider and along a passage 132 in the plunger. The passage extends to the rear end 114 of the plunger. The coil spring 122 extends around the rod, and the rod supports the spring. The rear end of the spring abuts an enlarged rear end 136 of the rod that is fixed in position in the frame cavity.

When the magnet 111 on the slider lies adjacent one of the reed switches 103-105, that reed switch is operated (opened or closed). When the magnet does not lie adjacent to a reed switch, that reed switch automatically opens. The frame 112, the plunger 116, the rod 130, the coil spring 122, and other parts that lie in the vicinity of the reed switches are formed of nonmagnetic material.

The frame of the position indicator includes a main frame part 140, a rear cap 142 that closes the rear of the cavity, and a cable guide in the form of a transverse frame part 144 that forms a cable passage 146 that guides a cable 148 in extension out of the indicator frame. The transverse frame part extends perpendicular to the axis 150 of the valve and indicator. A fitting 152 is included which has a threaded front end 154 that threads into a hole in the valve housing, similar to the hole 52 (Fig. 2). The fitting serves as a rack stop. The main frame 140 is attached by one or more set screws 160 to the fitting 152. The set screw(s) can be loosened and the main frame turned about axis 150, such that cable 148 extends from the housing in a desired one of multiple direction. In most cases this reduces cable bending, to lengthen the life of the cable. The fact that the cable extends perpendicular to the axis, allows a plurality of valves spaced apart along a common axis, to lie close together along that axis.

Thus, the invention provides a position indicator for a valve with a piston assembly that slides along an axis in a valve housing, wherein the position indicator is a small, self-contained additional device that can be attached to the valve, especially a prior art valve and that provides an electrical output along a cable. The position indicator includes a frame that forms a cavity, and a plunger with a rear end that lies in the cavity and with a front end that projects into the valve chamber and lies against the rear of the piston assembly. The position indicator can include a plurality of switches in the frame cavity, and the plunger or a slider at the rear end of the plunger, carries a switch operator that operates different switches as the plunger slides in unison with the piston assembly. A variety of switch operators can be used besides the described mechanical and magnetic operators illustrated, including microswitches, optical and inductive operators. In one indicator, the plunger has a passage extending into its rear end, and the switch indicator includes a stationary rod that projects into the passage, with a coiled compression spring lying around the rod and having a front end that biases the plunger forward. The front end of a fitting on the position indicator can be installed in a hole in the rear end of a prior art valve, to replace a rear stop. A fitting attached to the main frame part enables a cable that extends from the position indicator to extend in any direction perpendicular to the axis.

Although particular embodiments of the invention have been described and illustrated herein, it is recognized that modifications and variations may readily occur to those skilled in the art, and consequently, it is intended that the claims be interpreted to cover such modifications and equivalents.

## Claims

1. In a valve that includes a housing (12) that has front and rear ends and that forms a chamber (34), and a piston assembly (24) that is slidable in said chamber in front and rear directions (F, R) along an axis (32, 150) between a plurality of positions, said piston assembly including a piston part (30) that seals to walls of said chamber and that is actuated by pressured fluid, to direct the flow of fluid, the improvement comprising:
an indicator (20) that indicates the position of said piston assembly, comprising a frame (60, 112), a plunger (50, 116) mounted on said frame and slidable forward and rearward in said frame, a spring (70, 122) that urges said plunger forward, a plurality of switches (81, 82, 83,103, 104, 105) mounted on said frame and spaced apart along said axis, and a switch operator (73, 111) that is coupled to said plunger to move forward and rearward with the plunger and that operates a selected one of said switches when said switch operator moves adjacent to the selected switch;
said indicator frame being mounted on said housing with a front end (56, 124) of said plunger projecting into said chamber and coupled to said piston assembly to be moved by it.

2. The improvement described in claim 1 wherein:
said plunger has a plunger passage (132) extending forward from a rear end (114) of the plunger, and said position indicator includes a rod (130) with a front portion that lies in said plunger passage, with said plunger being slidable forward and rearward around said rod.

3. The improvement described in claim 2 wherein:
said spring (122) has a rear end that has a fixed position, said spring extends around said rod, and said spring has a front end (120) that biases said plunger forward.

4. The improvement described in claim 1 wherein:
said switch operator is in the form of a slider (72, 113) that lies against a rear end of said plunger, with said spring having a front end that abuts said slider and biases it forward so the slider moves with the plunger.

5. The improvement described in claim 1 wherein:
said frame has a cable guide passage (146) that extends perpendicular to said axis (150), and including a cable (148) having a plurality of wires that connect to said switches, said cable extending through said cable guide in a direction primarily perpendicular to said axis; and including
a fitting (152) that has a front end attached at a fixed orientation to said housing rear end and having a rear portion that is attachable to said frame at a plurality of positions angled about said axis, to thereby enable the cable to extend in multiple directions from said cable guide.

6. A position indicator (20, 100) for mounting on a valve (10) that has a housing (12) that forms a chamber (34) with a chamber rear end that can be opened, and that has a piston assembly (24) that is slidable along an axis (32, 150) in front and rear directions in the chamber, wherein:
said position indicator includes an indicator frame (60, 112) that forms a cavity (62, 110) with an open front end, a plunger (50, 116) slidably mounted on said indicator frame to slide in opposite directions along said axis and having a plunger rear end (64, 114) that lies in said cavity and a plunger front end (56, 124) that is projectable forward of said frame, a plurality of switches (81, 82, 83, 103, 104, 105) spaced along said axis, and a switch operator (73, 111) that is coupled to said plunger rear end and that passes adjacent to different one of said switches to operate them as the plunger moves along said axis;
a spring (70, 122) in said cavity that urges said plunger front end to project forward along said axis, beyond said indicator frame, to enable the plunger front end to abut a rear end of said piston assembly that lies in said housing.

7. The position indicator described in claim 6, wherein:
said plunger has a passage (132) extending along said axis (150) to a plunger rear end (114), and including a rod (130) fixed in said cavity and extending into said passage, and said spring (122) that lies around said rod and that has a spring front end (120) that urges said plunger rear end forward.

8. The position indicator described in claim 7 wherein:
said switch operator is in the form of a slider (72, 113) with a hole through which said rod extends, said slider having a front end that lies against said plunger rear end, and said spring front end engages said slider.

9. A valve that includes a housing (12) that has front and rear ends and that forms a chamber (34), and a piston assembly (24) that is slidable in said chamber in front and rear directions along an axis (32, 150) between a plurality of positions, said piston assembly including a piston part (30) that seals to walls of said chamber and that is actuated by pressured fluid, to direct the flow of fluid, the improvement comprising:
a position indicator (20, 100) that indicates the position of said piston assembly, comprising a frame (60, 112), a plunger (50, 116) mounted on said frame and slidable forward and rearward in said frame, a spring (70, 122) that urges said plunger forward, a slider (72, 113) coupled to said plunger to move with it, and position indicating means mounted on said frame to sense the position of said slider and generate an electrical output that indicates the position of said plunger;
said indicator frame being mounted on said housing with a front end (56, 124) of said plunger projecting into said chamber and biased against the rear end of said piston assembly.

10. The improvement described in claim 9 wherein:
said plunger has a plunger passage (132) extending forward into the plunger from a rear end (14) of the plunger, and said position indicator includes a rod (130) with a front portion that lies in said plunger passage, with said plunger being slidable forward and rearward around said rod;
said spring has a rear end that has a fixed position, said spring extends around said rod, and said spring has a front end that biases said plunger forward.

11. The improvement described in claim 9 wherein:
said frame has a cable guide (144) that extends perpendicular to said axis, and including a cable (148) having a plurality of wires that connect to said switches, said cable extending through said cable guide in a direction primarily perpendicular to said axis; and including
a fitting (152) that has a front end attached at a fixed orientation to said housing rear end and having a rear portion that is attachable to said frame at a plurality of positions angled about said axis, to thereby enable the cable to extend in multiple directions from said cable guide.
